# EUROPÄISCHE PATENTANMELDUNG

(11) **EP 2 742 995 A1**
(43) Veröffentlichungstag der Anmeldung: **18.06.2014**
(21) Anmeldenummer: 12196410.0
(22) Anmeldetag: 11.12.2012
(51) Int. Cl.: B01J 19/18, C04B 24/26, C08F 2/06, C08F 290/06

(54) **Kontinuierliches Verfahren zur Herstellung von Copolymeren**

(71) Anmelder: Construction Research & Technology GmbH, 83308 Trostberg (DE)
(72) Erfinder: Schwede, Christian, 69469 Weinheim (DE); Kaiser, Günter, 67071 Ludwigshafen (DE); Brodhagen, Andreas, 67311 Tiefenthal (DE); Vierle, Mario, 83512 Wasserburg (DE)

(57) **Zusammenfassung**

Die vorliegende Erfindung betrifft ein Verfahren zur kontinuierlichen Herstellung von Polymeren in einer Polymerisationseinrichtung, wobei die Ausgangsstoffe mindestens ein olefinisch ungesättigtes Polyethermakromonomer und mindestens ein olefinisch ungesättigtes Säuremonomer und mindestens einen radikalischen Initiator umfassen und die Polymerisation bei Temperaturen zwischen - 20 und +120°C durchgeführt wird, wobei die Polymerisationseinrichtung mindestens einen Schlaufenreaktor umfasst, welcher mindestens eine Zuführungsleitung für die Ausgangsstoffe und mindestens einen Abfluss aufweist, wobei der Schlaufenreaktor mindestens eine Reaktionszone umfasst, welche eine volumenspezifische Wärmeabfuhrleistung von mindestens 10 kW/m³ aufweist. Weiterhin wird die Verwendung des erfindungsgemäßen Polymers als Dispergiermittel für hydraulische Bindemittel offenbart.

## Beschreibung

Die vorliegende Erfindung betrifft ein Verfahren zur kontinuierlichen Herstellung eines Copolymers, wobei die Polymerisationseinrichtung einen Schlaufenreaktor umfasst. Weiterhin wird das erfindungsgemäße Copolymer sowie dessen Verwendung als Dispergiermittel für hydraulische Bindemittel offenbart.

Es ist bekannt, dass man wässrige Aufschlämmungen von pulverförmigen anorganischen oder organischen Substanzen, wie Tonen, Silikatmehl, Kreide, Ruß, Gesteinsmehl und hydraulischen Bindemitteln zur Verbesserung ihrer Verarbeitbarkeit, d. h. Knetbarkeit, Streichfähigkeit, Spritzbarkeit, Pumpbarkeit oder Fließfähigkeit, oft Zusatzmittel in Form von Dispergiermitteln zusetzt. Derartige Zusatzmittel sind in der Lage, Feststoffagglomerate aufzubrechen, die gebildeten Teilchen zu dispergieren und auf diese Weise die Verarbeitbarkeit zu verbessern. Dieser Effekt wird insbesondere auch gezielt bei der Herstellung von Baustoffmischungen, die hydraulische Bindemittel wie Zement, Kalk, Gips oder Anhydrid enthalten, ausgenutzt.

Um diese Baustoffmischungen auf der Basis der genannten Bindemittel in eine gebrauchsfertige, verarbeitbare Form zu überführen, ist in der Regel wesentlich mehr Anmachwasser erforderlich, als für den nachfolgenden Hydratations- bzw. Erhärtungsprozess notwendig wäre. Der durch das überschüssige, später verdunstende Wasser gebildete Hohlraumanteil im Betonkörper führt zu signifikant verschlechterten mechanischen Festigkeiten und Beständigkeiten.

Um diesen überschüssigen Wasseranteil bei einer vorgegebenen Verarbeitungskonsistenz zu reduzieren und/oder die Verarbeitbarkeit bei einem vorgegebenen Wasser/Bindemittel-Verhältnis zu verbessern, werden Zusatzmittel eingesetzt, die im Allgemeinen als Wasserreduktions- oder Fließmittel bezeichnet werden. Als derartige Mittel werden in der Praxis häufig Copolymere eingesetzt, welche durch radikalische Copolymerisation von Säuremonomeren mit Polyethermakromonomeren hergestellt werden. Üblicherweise erfolgt die Copolymerisation entweder in der Batch- oder in der Semi-Batch-Fahrweise.

Die EP-B-1 218 427 beschreibt ein kontinuierliches Herstellungsverfahren für besagte Copolymere, die als Fließmittel/Wasserreduzierungsmittel eine bessere Performance zeigen sollen als entsprechende Copolymere, die mit der Batch- bzw. Semi-Batch-Betriebsweise hergestellt worden sind. Gemäß dem in der EP-B-1 218 427 beschriebenen kontinuierlichen Herstellungsverfahren wird zunächst ein Monomerstrom hergestellt, welcher einerseits ein Säuremonomer und andererseits ein Polyethermakromonomer enthält. Dieser vorab erzeugte, Säuremonomer und Polyethermakromonomer enthaltende Monomerstrom wird mit einem Initiatorstrom in einer Reaktionszone polymerisiert, wobei schließlich ein Polymerstrom aus der Reaktionszone abgezogen wird. Die WO 2009/100956 beschreibt ebenfalls ein kontinuierliches Verfahren zur Herstellung von Copolymeren auf Basis von Säuremonomeren und Polyethermakromonomeren. Der wesentliche Unterschied zur EP-B-1 218 427 besteht in der getrennten Zugabe von Säuremonomer und Polyethermakromonomer. Hierdurch können unerwünschte Nebenrektionen zwischen Säuremonomer und Polyethermakromonomer vermieden werden.

Weiterhin besteht Bedarf effizientere kontinuierliche Verfahren zur Herstellung von Copolymeren auf Basis von Säuremonomeren und Polyethermakromonomeren bereitzustellen. Insbesondere sollte hierbei die Raum-Zeitausbeute erhöht und die Performance der hergestellten Fließmittel weiter verbessert werden.

Der vorliegenden Erfindung lag deshalb die Aufgabe zugrunde, ein Verfahren bereitzustellen, welches die Effizienz der Herstellung von Copolymeren weiter verbessert, wobei die Copolymere als Dispergiermittel für hydraulische Bindemittel, speziell als Fließmittel/Wasserreduktionsmittel, eine gute Performance zeigen sollten.

Die Lösung dieser Aufgabe ist ein Verfahren zur kontinuierlichen Herstellung von Polymeren in einer Polymerisationseinrichtung, wobei die Ausgangsstoffe mindestens ein olefinisch ungesättigtes Polyethermakromonomer und mindestens ein olefinisch ungesättigtes Säuremonomer und mindestens einen radikalischen Initiator umfassen und die Polymerisation bei Temperaturen zwischen - 20 und +120°C durchgeführt wird, wobei die Polymerisationseinrichtung mindestens einen Schlaufenreaktor umfasst, welcher mindestens eine Zuführungsleitungen für die Ausgangsstoffe und mindestens einen Abfluss aufweist, wobei der Schlaufenreaktor mindestens eine Reaktionszone umfasst, welche eine volumenspezifische Wärmeabfuhrleistung von mindestens 10 kW/m³ aufweist.

Es wurde überraschend gefunden, dass in einer Polymerisationseinrichtung, umfassend einen Schlaufenreaktor, im Vergleich zum Stand der Technik deutlich niedrigere Verweilzeiten und somit höhere Raum-Zeit-Ausbeuten verwirklicht werden können. Hierbei ist es erfindungswesentlich, dass der Schlaufenreaktor mindestens eine Reaktionszone umfasst, welche eine volumenspezifische Wärmeabfuhrleistung von mindestens 10 kW/m³ aufweist. Bevorzugt sind hierbei Bauformen umfassend mindestens eine Reaktionszone mit einer volumenspezifische Wärmeabfuhrleistung von mindestens 15 kW/m³. Besonders bevorzugt ist der Bereich von 10 bis 2000 kW/m³. In einer besonders bevorzugten Ausführungsform weist der gesamte Schlaufenreaktor eine volumenspezifische Wärmeabfuhrleistung von mindestens 20 kW/m³ auf, besonders bevorzugt ist der Bereich von 20 bis 1000 kW/m³.

Derartige Wärmeaustauschleistungen sind mit herkömmlichen Reaktoren, wie sie z.B. in WO 2009/100956 beschrieben sind, nicht erreichbar. Die erfindungsgemäßen Schlaufenreaktoren weisen vorzugsweise in der Verweilzeitstrecke innenliegende Kühl- und Verweilzeitelemente auf, welche konvektiv durch das Reaktionsmedium überströmt werden. Besonders bevorzugt weist die mindestens eine Reaktionszone, welche eine volumenspezifische Wärmeabfuhrleistung von mindestens 10 kW/m³ aufweist, innenliegende Kühl- und Verweilzeitelemente auf. Dies ist beispielsweise durch das Einbinden eines Rohreaktors mit Kühl- und Mischelementen in den Schlaufenreaktor möglich, wobei es sich beispielsweise um einen Rohrreaktor vom Typ CSE-XR der Firma Fluitec Georg AG oder einen SMR Reaktor der Fa. Sulzer handeln kann. In einer besonders bevorzugten Ausführungsform umfasst der erfindungsgemäße Schlaufenreaktor mehrere Rohreaktors mit Kühl- und Mischelementen, welche ringförmig miteinander verbunden sind. Insbesondere kann die Polymerisationseinrichtung aus einem Schlaufenreaktor bestehen, welcher aus mehrere Rohreaktors mit Kühl- und Mischelementen, welche ringförmig miteinander verbunden sind, aufgebaut ist. Insbesondere bevorzugt kann es sich hierbei um 2, 3, 4, 5, oder 6 Rohreaktoren handeln.

In einer besonders bevorzugten Ausführungsform umfasst der Schlaufenreaktor innenliegende Kühl- und Mischelemente. Durch die innenliegenden Kühlelemente kann nicht nur eine sehr große Fläche zum Wärmeaustausch zwischen Kühlmedium und Reaktionsmischung generiert und damit eine hohe Wärmeaustauschleistung erreicht werden, sondern die Kühlelemente können bei geeigneter Ausführung gleichzeitig die Durchmischung der Reaktionsmischung gewährleisten bzw. verbessern. Die gleichzeitige Mischung und Wärmeabfuhr ermöglicht somit eine hohe Wärmeabfuhr bei geringen Temperaturdifferenzen zwischen Kühlmedium und Reaktionsmischung. Dies wiederum ist eine wichtige Voraussetzung, um die kontinuierliche Reaktion unabhängig vom exakten Durchsatz in einem engen Temperaturfenster zu halten.
Vorzugsweise ermöglicht der Schlaufenreaktor somit eine enge Temperaturkontrolle, d.h. ein Ansteigen der Temperatur während der Reaktion um weniger als 10°C, besonders bevorzugt um weniger als 5°C.

In einer bevorzugten Ausführungsform umfasst der Schlaufenreaktor eine Einrichtung zur Umwälzung des Reaktionsmediums. Insbesondere handelt es sich hierbei um Zahnradpumpen.

Der erfindungsgemäße Schlaufenreaktor führt zu einer Rückvermischung des Reaktionsmediums. Hierdurch kann die Konzentration der olefinisch ungesättigten Polyethermakromonomer in der Reaktionslösung sehr niedrig eingestellt werden. Dies ermöglicht es Nebenreaktionen, wie beispielsweise die Hydrolysereaktionen der Polyethermakromonomere zurückzudrängen und gleichzeitig hohe Umsätze zu den gewünschten Polymeren zu ermöglichen.

Gegebenenfalls kann die Polymerisationseinrichtung noch mindestens einen dem Polymerisationsreaktor nachgeschalteten, kontinuierlich betriebenen Reaktor aufweisen, in welchem über den Abfluss des Schlaufenreaktors die Copolymer enthaltende Reaktionskomposition eingeleitet wird. In den nachgeschalteten Reaktor können dann monomere Ausgangsstoffe und/oder Initiatorkomponenten zur Umsatzsteigerung eingeleitet werden.

Unter olefinisch ungesättigtes Säuremonomer sollen radikalisch copolymerisierbare, mindestens eine Kohlenstoffdoppelbindung aufweisenden Monomere verstanden werden, welche mindestens eine Säurefunktion enthalten und im wässrigen Medium als Säure reagieren. Weiterhin sollen als Säuremonomer auch radikalisch copolymerisierbare, mindestens eine Kohlenstoffdoppelbindung aufweisenden Monomere verstanden werden, welche aufgrund von Hydrolysereaktion im wässrigen Medium mindestens eine Säurefunktion ausbilden und im wässrigen Medium als Säure reagieren (Beispiel: Maleinsäureanhydrid). Olefinisch ungesättigte Polyethermakromonomere im Sinne der vorliegenden Erfindung sind radikalisch copolymerisierbare Verbindungen mit mindestens einer Kohlenstoffdoppelbindung, welche mindestens zwei Ether-Sauerstoffatome aufweisen und zwar mit der Maßgabe, dass die in dem Copolymer enthaltenen Polyethermakromonomerstruktureinheiten Seitenketten aufweisen, die mindestens zwei Ether-Sauerstoffatome enthalten.

In einer bevorzugten Ausführungsform der Erfindung wird das Säuremonomer durch Polymerisation umgesetzt und dadurch eine Struktureinheit im Copolymer erzeugt, die gemäß einer der allgemeinen Formeln (Ia), (Ib), (Ic) und/oder (Id) ist 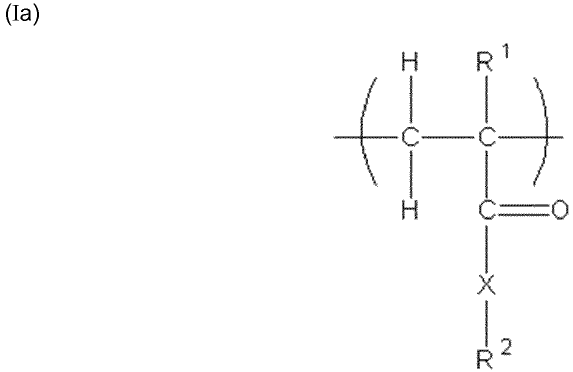 mit
R¹ gleich oder verschieden, d.h. innerhalb des Copolymers entweder gleich oder verschieden substituiert, sowie repräsentiert durch H und/ oder eine unverzweigte oder verzweigte C₁ - C₄ Alkylgruppe, bevorzugt H oder CH₃;
X gleich oder verschieden sowie repräsentiert durch NH-(CₙH₂ₙ) mit n = 1, 2, 3 oder 4 und/oder O-(CₙH₂ₙ) mit n = 1, 2, 3 oder 4, bevorzugt NH-C₄H₈ und/oder durch eine nicht vorhandene Einheit, d.h., dass X nicht vorhanden ist;
R² gleich oder verschieden sowie repräsentiert durch OH, SO₃H, PO₃H₂, O-PO₃H₂ und/oder para substituiertes C₆H₄-SO₃H, mit der Maßgabe, dass falls X eine nicht vorhandene Einheit ist, R² durch OH repräsentiert wird; 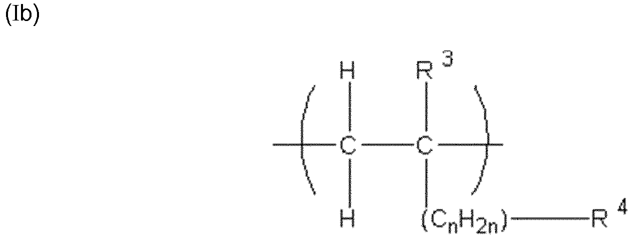 mit
R³ gleich oder verschieden sowie repräsentiert durch H und/oder eine unverzweigte oder verzweigte C₁ - C₄ Alkylgruppe, bevorzugt CH₃;
n = 0,1,2,3 oder 4
R⁴ gleich oder verschieden sowie repräsentiert durch SO₃H, PO₃H₂, O-PO₃H₂ und/oder para substituiert vorliegendes C₆H₄-SO₃H; 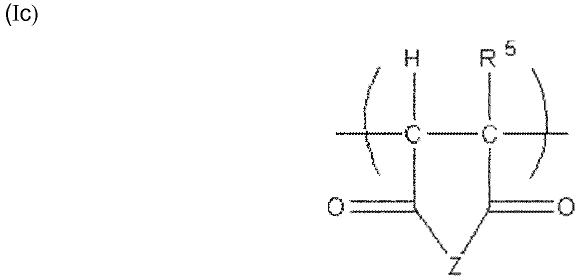 mit
R⁵ gleich oder verschieden sowie repräsentiert durch H und/oder eine unverzweigte oder verzweigte C₁ - C₄ Alkylgruppe, bevorzugt H;
Z gleich oder verschieden sowie repräsentiert durch O und/oder NH; 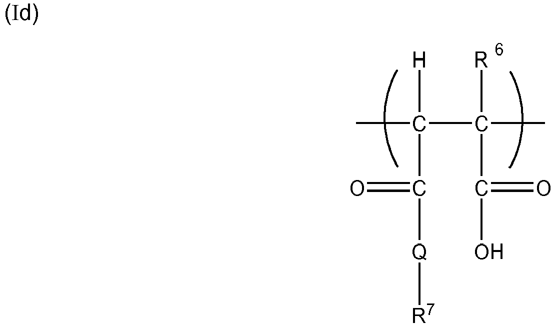 mit
R⁶ gleich oder verschieden sowie repräsentiert durch H und/oder eine unverzweigte oder verzweigte C₁ - C₄ Alkylgruppe, bevorzugt H;
Q gleich oder verschieden sowie repräsentiert durch NH und/oder O;
R⁷ gleich oder verschieden sowie repräsentiert durch H, (CₙH₂ₙ)-SO₃H mit n = 0, 1, 2, 3 oder 4, (CₙH₂ₙ)-OH mit n = 0, 1, 2, 3 oder 4; (CₙH₂ₙ)-PO₃H₂ mit n = 0, 1, 2, 3 oder 4, (CₙH₂ₙ)-OPO₃H₂ mit n = 0, 1, 2, 3 oder 4, (C₆H₄)-SO₃H, (C₆H₄)-PO₃H₂, (C₆H₄)-OPO₃H₂ und/oder (CₘH₂ₘ)ₑ-O-(A'O)_{α}-R⁹ mit m = 0, 1, 2, 3 oder 4, e = 0, 1, 2, 3 oder 4, A' = C_{x'} H_{2x'} mit x' = 2, 3, 4 oder 5, bevorzugt x' = 2 und/oder CH₂C(C₆H₅)H-, α = eine ganze Zahl von 1 bis 350, bevorzugt α = 15 - 200 mit R⁹ gleich oder verschieden sowie repräsentiert durch eine unverzweigte oder verzweigte C₁ - C₄ Alkylgruppe, bevorzugt CH₃.

Bezüglich R², R⁴ und R⁷ in den Strukturformeln Ia, Ib und Id ist zu bemerken, dass die entsprechenden Säurefunktionen, insbesondere bei Zugabe von Basen, im Polymer deprotoniert vorliegen können, also in Form der Salze.

Die vorstehend und nachstehend benutzte Ausdrucksweise "gleich oder verschieden" soll jeweils Konstanz oder Variabilität innerhalb des durch das erfindungsgemäße Verfahren erzeugten Copolymers bedeuten.

In der Praxis wird als Säuremonomer häufig Methacrylsäure, Acrylsäure, Maleinsäure, Maleinsäureanhydrid, ein Halbester der Maleinsäure oder eine Mischung aus mehreren dieser Komponenten eingesetzt.

In einer bevorzugten Ausführungsform der Erfindung wird das Polyethermakromonomer durch Polymerisation umgesetzt und dadurch eine Struktureinheit im Copolymer erzeugt, die gemäß einer der allgemeinen Formeln (IIa), (IIb) (IIc) und/oder (IId) ist 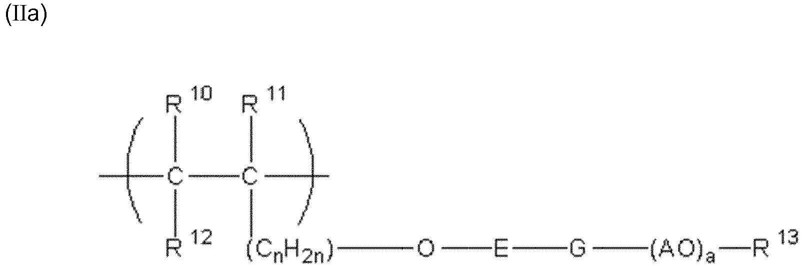 mit
R¹⁰, R¹¹ sowie R¹² jeweils gleich oder verschieden und unabhängig voneinander repräsentiert durch H und/oder eine unverzweigte oder verzweigte C₁ - C₄ Alkylgruppe, bevorzugt H und/oder CH₃;
E gleich oder verschieden sowie repräsentiert durch eine unverzweigte oder verzweigte C₁ - C₆ Alkylengruppe, insbesondere C₁, C₂, C₃, C₄, C₅ oder C₆ zwar jeweils typisch, jedoch bevorzugt C₂ und C₄, eine Cyclohexylgruppe, CH₂-C₆H₁₀, ortho, meta oder para substituiert vorliegendes C₆H₄ und/oder eine nicht vorhandene Einheit, d.h., dass E nicht vorhanden ist;
G gleich oder verschieden sowie repräsentiert durch O, NH und/oder CO-NH mit der Maßgabe, dass falls E eine nicht vorhandene Einheit ist, G auch als ehe nicht vorhandene Einheit vorliegt, d.h., dass G nicht vorhanden ist;
A gleich oder verschieden sowie repräsentiert durch CₓH₂ₓ mit x = 2, 3, 4 und/oder 5 bevorzugt x = 2 und/oder CH₂CH(C₆H₅);
n gleich oder verschieden sowie repräsentiert durch 0, 1, 2, 3, 4 und/oder 5;
a gleich oder verschieden sowie repräsentiert durch eine ganze Zahl von 2 bis 350, bevorzugt 10 - 200;
R¹³ gleich oder verschieden sowie repräsentiert durch H, eine unverzweigte oder verzweigte C₁ - C₄ Alkylgruppe, CO-NH₂, und/oder COCH₃, bevorzugt H, CH₃; 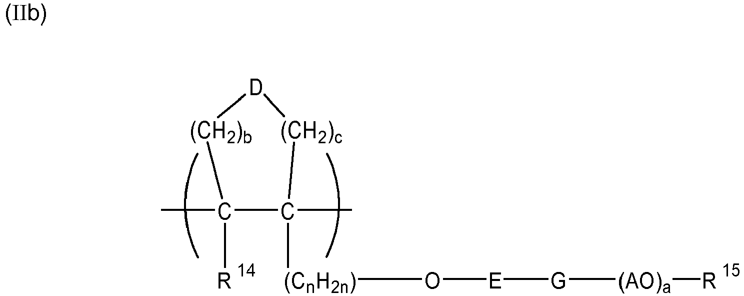 mit
R¹⁴ gleich oder verschieden sowie repräsentiert durch H und/oder eine unverzweigte oder verzweigte C₁ - C₄ Alkylgruppe, bevorzugt H;
E gleich oder verschieden sowie repräsentiert durch eine unverzweigte oder verzweigte C₁ - C₆ Alkylengruppe, bevorzugt C₂H₄, eine Cyclohexylgruppe, CH₂-C₆H₁₀, ortho, meta oder para substituiert vorliegendes C₆H₄ und/oder durch eine nichtvorhandene Einheit, d.h. E ist nicht vorhanden;
G gleich oder verschieden sowie repräsentiert durch eine nicht vorhandene Einheit, O, NH und/oder CO-NH mit der Maßgabe, dass falls E eine nicht vorhandene Einheit ist, G auch als eine nicht vorhandene Einheit, d.h. G ist nicht vorhanden, vorliegt;
A gleich oder verschieden sowie repräsentiert durch CₓH₂ₓ mit x = 2, 3, 4 und/oder 5, bevorzugt x = 2 und/oder CH₂CH(C₆H₅);
n gleich oder verschieden sowie repräsentiert durch 0, 1, 2, 3, 4 und/oder 5;
a gleich oder verschieden sowie repräsentiert durch eine ganze Zahl von 2 bis 350, bevorzugt 10 - 200;
D gleich oder verschieden sowie repräsentiert durch eine nicht vorhandene Einheit, d.h. D ist nicht vorhanden, NH und/oder O, mit der Maßgabe, dass falls D eine nicht vorhandene Einheit ist: b = 0, 1, 2, 3 oder 4 sowie c = 0, 1, 2, 3 oder 4, wobei b + c = 3 oder 4, und
mit der Maßgabe dass wenn D NH und/oder O ist: b = 0, 1, 2 oder 3, c = 0, 1, 2 oder 3, wobei b + c = 2 oder 3;
R¹⁵ gleich oder verschieden sowie repräsentiert durch H, eine unverzweigte oder verzweigte C₁ - C₄ Alkylgruppe, CO-NH₂, und/oder COCH₃, bevorzugt H; 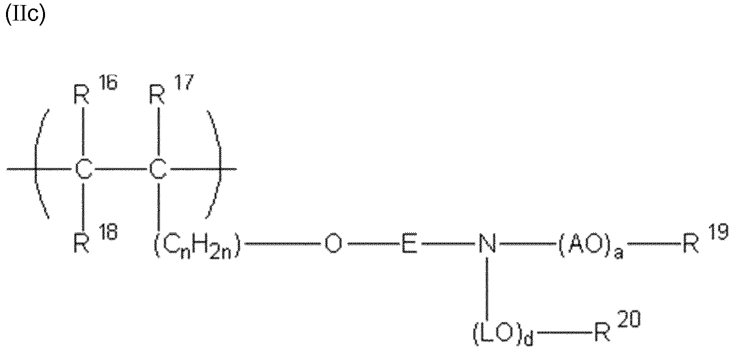 mit
R¹⁶, R¹⁷ sowie R¹⁸ jeweils gleich oder verschieden und unabhängig voneinander repräsentiert durch H und/oder eine unverzweigte oder verzweigte C₁ - C₄ Alkylgruppe, bevorzugt H und/oder CH₃;
E gleich oder verschieden sowie repräsentiert durch eine unverzweigte oder verzweigte C₁ - C₆ Alkylengruppe, bevorzugt C₂H₄ oder C₄H₈, eine Cyclohexylgruppe, CH₂-C₆H₁₀, ortho, meta oder para substituiert vorliegendes G₆H₄ und/oder durch eine nicht vorhandene Einheit, d.h. E ist nicht vorhanden;
A gleich oder verschieden sowie repräsentiert durch CₓH₂ₓ mit x = 2, 3, 4 und/oder 5, bevorzugt x = 2 und/oder CH₂CH(C₆H₅);
n gleich oder verschieden sowie repräsentiert durch 0, 1, 2, 3, 4 und/oder 5;
L gleich oder verschieden sowie repräsentiert durch CₓH₂ₓ mit x = 2, 3, 4 und/oder 5, bevorzugt x = 2 und/oder CH₂-CH(C₆-H₅);
a gleich oder verschieden sowie repräsentiert durch eine ganze Zahl von 2 bis 350, bevorzugt 10 - 200;
d gleich oder verschieden sowie repräsentiert durch eine ganze Zahl von 1 bis 350, bevorzugt 10 - 200;
R¹⁹ gleich oder verschieden sowie repräsentiert durch H und/oder eine unverzweigte oder verzweigte C₁ - C₄ Alkylgruppe, bevorzugt H,
R²⁰ gleich oder verschieden sowie repräsentiert durch H und/oder eine unverzweigte C₁ - C₄ Alkylgruppe, bevorzugt H. 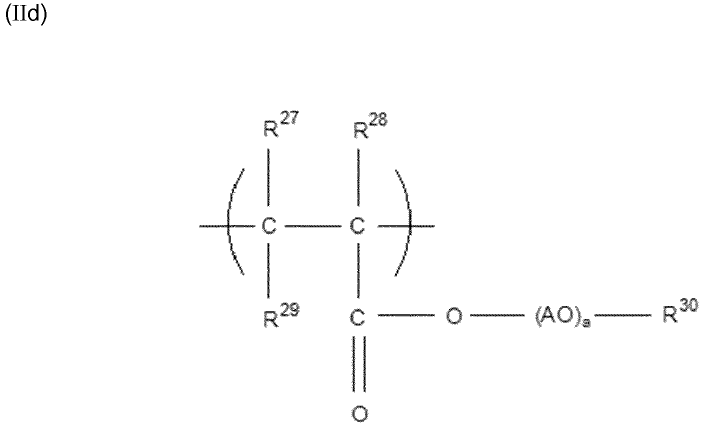 worin
R²⁷, R²⁸ und R²⁹ gleich oder verschieden sind und unabhängig voneinander für H stehen und/oder einen unverzweigten oder verzweigten C₁ - C₄ verzweigten Alkylgruppenrest stehen;
A sind gleich oder verschieden und bedeuten CₓH_{2X} mit x = 2, 3, 4 und/oder 5 und/oder CH₂CH(C₆H₅);
a sind gleich oder verschieden und stehen für eine ganze Zahl zwischen 2 und 350;
R³⁰ sind gleich oder verschieden und stehen für H und/oder einen unverzweigten oder verzweigten C₁ -C₄ Alkylrest.
Allgemein kann gesagt werden, dass die Poly-Alkoxyseitenketten (AO)ₐ der Polyethermakromonomere zwar meist reine Poly-Ethoxyseitenketten sind, wobei jedoch nicht selten auch gemischte Poly-Alkoxyseitenketten, insbesondere solche, die sowohl Propoxy- als auch Ethoxy-Gruppen enthalten, vorliegen.

In der Praxis wird häufig als Polyethermakromonomer alkoxyliertes Isoprenol, also alkoxyliertes 3-Methyl-3-buten-1-ol und/oder alkoxylierter Hydroxybutylvinylether und/oder alkoxylierter (Meth)allylalkohol, wobei Allylalkohol bevorzugt gegenüber Methallylalkohol) ist, mit normalerweise jeweils einer arithmethisch mittleren Zahl an Oxyalkylengruppen von 4 bis 350 eingesetzt. Besonders bevorzugt ist alkoxylierter Hydroxybutylvinylether.

Neben dem Säuremonomer und dem Polyethermakromonomer können noch weitere Monomertypen zum Einsatz kommen. Dies wird dann in der Regel so in die Praxis umgesetzt, dass als monomerer Ausgangsstoff eine vinylisch ungesättigte Verbindung in den Polymerisationsreaktor eingeleitet wird, welche durch Polymerisation umgesetzt wird und dadurch eine Struktureinheit im Copolymer erzeugt, die gemäß der allgemeinen Formeln (IIIa) und/oder (IIIb) vorliegt 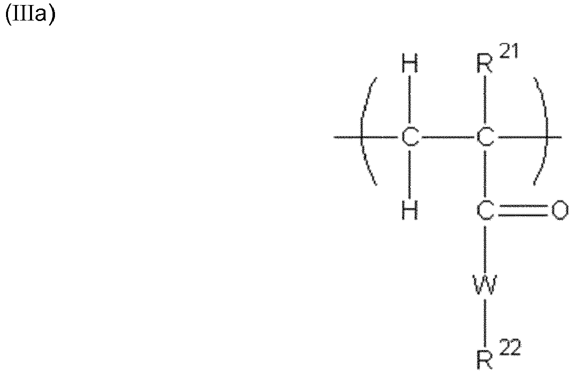 mit
R²¹ gleich oder verschieden sowie repräsentiert durch H und/oder eine unverzweigte oder verzweigte C₁ - C₄ Gruppe, bevorzugt H oder CH₃;
W gleich oder verschieden sowie repräsentiert durch O und/oder NH;
R²² gleich oder verschieden sowie repräsentiert durch eine verzweigte oder unverzweigte C₁ - C₅-Monohydoxyalkylgruppe, insbesondere C₁, C₂, C₃, C₄ oder C₅ ist zwar jeweils typisch, bevorzugt ist jedoch C₂ und/oder C₃; 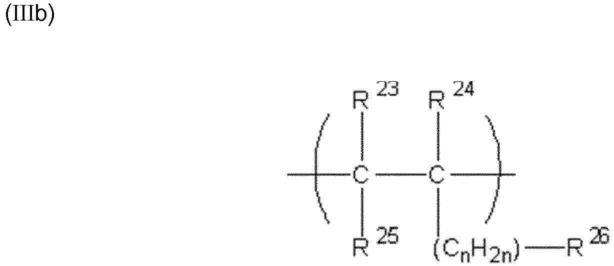 mit
R²³, R²⁴ und R² jeweils gleich oder verschieden sowie jeweils unabhängig repräsentiert durch H und/oder eine unverzweigte oder verzweigte C₁ - C₄ Alkylgruppe, bevorzugt H und/oder CH₃;
n gleich oder verschieden sowie repräsentiert durch 0, 1, 2, 3 und/oder 4;
R²⁶ gleich oder verschieden sowie repräsentiert durch (C₆H₅), OH und/oder OCOCH₃.
Typische Monomere, welche durch Polymerisation die Struktureinheiten (IIIa) oder (IIIb) erzeugen sind beispielsweise 2-Hydroxypropylacrylat, Isoprenol oder Allylalkohol. Als weiteres typisches Monomer wäre in diesem Zusammenhang noch Hydroxybutylvinylether zu nennen.

Normalerweise werden insgesamt mindestens 45 Mol %, bevorzugt jedoch mindestens 80 Mol % aller Struktureinheiten des durch das Verfahren erzeugten Copolymers durch Polymerisation von Säuremonomer und Polyethermakromonomer erzeugt.

In einer bevorzugten Ausführungsform wird soviel Polyethermakromonomer pro Mol Säuremonomer in den Polymerisationsreaktor eingeleitet, dass sich im gebildeten Copolymer ein arithmetisch mittleres molares Verhältnis von Säuremonomerstruktureinheiten zu Polyethermakromonomerstruktureinheiten von 20 : 1 bis 1 : 1, bevorzugt von 12 : 1 bis 1 : 1 einstellt.

In der Regel wird als radikalischer Polymerisationsinitiator ein Redoxinitiator eingesetzt. Meist wird dann als Redoxinitiator das System H₂O₂/FeSO₄ gewählt, bevorzugt zusammen mit einem Reduktionsmittel. Als Reduktionsmittel kommen Natriumsulfit, das Dinatriumsalz der 2-Hydroxy-2-sulfinatoessigsäure, das Dinatriumsalz der 2-Hydroxy-2-sulfonatoessigsäure, Natriumhydroxymethansulfinat, Ascorbinsäure, Iso-Ascorbinsäure oder Mischungen davon in Betracht. Als das Redox-Initiatorsystem kommen auch andere Systeme in Frage, z.B. solche die auf t-Butylhydroperoxid, Ammonium- oder Kaliumperoxidisulfat basieren.

In einer weiteren Ausführungsform werden Initiatorkomponenten, z.B. H₂O₂, und das Polyethermakromonomer in vorgemischter Form in einem Strom in den Polymerisationsreaktor eingeleitet.

Grundsätzlich können jedoch als Initiatoren sämtliche unter Polymerisationsbedingungen in Radikale zerfallende Verbindungen wie z.B. Peroxide, Hydroperoxide, Persulfate, Azoverbindungen und Perphosphate eingesetzt werden. In Kombination der Radikalbildner mit geeigneten Reduktionsmitteln erhält man bekannte Redoxsysteme bzw. Redoxkatalysatoren. Geeignete Reduktionsmittel sind beispielsweise Natriumsulfit, das Dinatriumsalz der 2-Hydroxy-2-sulfonatoessigsäure, das Dinatriumsalz der 2-Hydroxy-2-sulfinatoessigsäure, Natriumhydroxymethansulfinat, Ascorbinsäure, Iso-Ascorbinsäure, Amine wie Diethanolamin oder Triethanolamin, Hydroxylamin oder Mischungen davon. Zweckmäßigerweise setzt man bei Verwendung von Redoxsystemen bzw. Katalysatoren zusätzlich wasserlösliche Salze von Übergangsmetallen wie Eisen, Kobalt, Nickel oder Silber ein, bevorzugt werden hierbei Eisensalze verwendet.

Meist wird ein Kettenregler, welcher bevorzugt in gelöster Form vorliegt, in den Polymerisationsreaktor eingeleitet.

Die monomeren Ausgangsstoffe und/oder der Initiator können in Form ihrer wässrigen Lösungen in den Polymerisationsreaktor eingeleitet werden.

In einer bevorzugten Ausführungsform wird das mindestens eine olefinisch ungesättigte Polyethermakromonomer und das mindestens eine olefinisch ungesättigte Säuremonomer getrennt über verschiedene Zuführungsleitungen dem Schlaufenreaktor zugeführt werden. Hierdurch werden Nebenreationen und insbesondere eine Hydrolyse des Polyethermakromonomer durch das Säuremonomer vermieden.

Die Erfindung betrifft außerdem das erfindungsgemäße Copolymer, welches gemäß dem vorstehend beschriebenen Verfahren herstellbar ist. Das erfindungsgemäße Copolymer liegt normalerweise als Kammpolymer vor.

Die Produktqualität bei der Durchführung des erfindungsgemäßen Prozesses wird vorzugsweise über die kontinuierlich in-line Überwachung der Qualität der Ausgangsmaterialien, der Zwischenprodukte und soweit nötig der Reaktionsprodukte verfolgt. Dabei können unterschiedliche Parameter untersucht bzw. gemessen werden. Geeignete Messmethoden sind alle, die in ausreichend kurzer Zeit die Rohstoffqualität und / oder den Umsatz der Reaktion detektieren können. Dies sind z. B. spektroskopische Verfahren, wie NIR-Spektroskopie, FT-IR- Spektroskopie, Raman-FT. Spektroskopie etc. Vorzugsweise wird der Umsatz der Reaktion kontrolliert. Beispielsweise kann dies durch Raman Spektroskopie erfolgen.

Weiterhin betrifft die Erfindung die Verwendung des erfindungsgemäßen Copolymers als Dispergiermittel für hydraulische Bindemittel.

Mit dem erfindungsgemäßen Verfahren können die erfindungsgemäßen Copolymere in einem kontinuierlichen Prozess hergestellt werden, wobei der Prozess folgende Vorteile aufweist:
- Gleichbleibende und verbesserte Produktqualität, d. h, Verminderung der Nebenreaktionen, kurze thermische Belastung von Ausgangsmaterialien und Produkten, erhöhte Selektivität der Reaktion.
- Hohe Raum-Zeitausbeute, d. h. hoher Mengenausstoß bei gleichzeitig geringem Reaktor hold up. Damit ist der kontinuierliche Prozess in dem erfindungsgemäßen Schlaufenreaktor auch hinsichtlich sicherheitstechnischer sowie toxikologischer Aspekte dem Batchprozess oder kontinuierlichen Batchprozess überlegen.
- Ein weiterer Vorteil des erfindungsgemäßen kontinuierlichen Verfahrens ist, dass man durch in-line Analytik die Qualität des erhaltenen Produktes während des laufenden Produktionsprozesses durch Anpassung von Reaktionsparametern, wie Verweilzeit, Temperaturprofile, Stöchiometrie der eingesetzten Komponenten etc. steuern kann. Zudem kann das Verfahren einfacher optimiert werden und damit ist ein effizienterer Rohstoffeinsatz möglich.

Im Folgenden soll die Erfindung anhand von Ausführungsbeispielen näher beschrieben werden.

### Beispiele

### Beschreibung der eingesetzten Polymerisationseinrichtung:

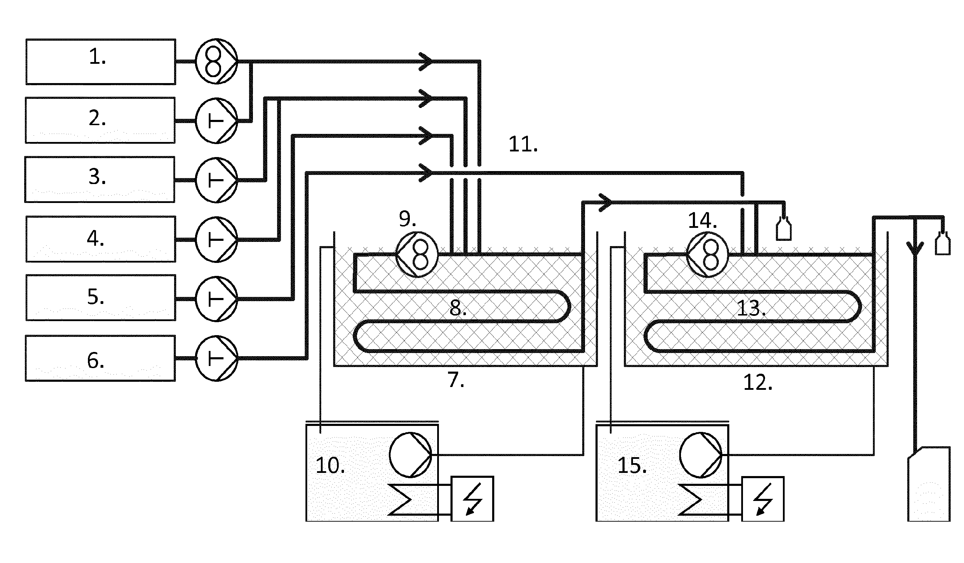

Eine für das erfindungsgemäße Verfahren im Labormaßstab ausgelegte Produktionsanlage für die kontinuierliche Produktion von Copolymeren ist in Abb. 1 schematisch dargestellt. Die Reaktionseinheit besteht aus zwei Schlaufenreaktoren (8 und 13) aus 8 mm Edelstahlrohr mit 1 mm Wandstärke, beide ausgestattet mit jeweils einer Kreislaufpumpe (9 und 14). Das Gesamtvolumen der Reaktoren beträgt 52 ml (Reaktor 8) und 51 ml (Reaktor 13). Die Reaktoren sind mit einer Rohrleitung verbunden (11). Reaktor (8) ist durch Zuleitungen mit den Vorratsgefäßen der Reaktanden verbunden. Mittels zwischengeschalteter Pumpen kann ein definierter Stoffstrom eingestellt werden. Der Anlagenaufbau enthält die folgenden Vorratsgefäße (verschließbare Glasbehälter mit Magnetrührvorrichtung): (1) für die wässerige Lösung der Vinyletherkomponente (das Polyethermakromonomer), Alkalilauge und der Initiatorkomponente 3 (Reduktionsmittel); (2) für eine wässrige Basenlösung zur Einstellung des in der Reaktion benötigten pH-Wertes, (3) für die wässerige Lösung des Säuremonomer 2-Propensäure (Acrylsäure), (4) für die Kettenübertragungskomponente und der Initiatorkomponente 2 (Fe²⁺-Salz), (5) für die erste Initiatorkomponente (H₂O₂), (6) für die Initiatorkomponente 3 (Reduktionsmittel). Die Zuleitungsrohre der Vorratsgefäße 1 und 2 sowie 3 und 4 werden jeweils zusammengeführt, so dass in den Reaktor 8 insgesamt drei Dosierleitungen führen, wobei die Position und die Eindringtiefe der Dosierleitungen in das Reaktionsmedium so gewählt sind, dass die Dosierung in eine Zone mit hoher Durchmischungseffizienz erfolgt. Zur Gewährleistung der Vermeidung einer Vorvermischung von Säuremonomer und Polyethermakromonomer werden die Monomere getrennt in den Reaktor dosiert. Reaktor (13) ist ebenfalls durch eine Zuleitung mit dem Vorratsgefäß (6) für Reaktanden verbunden. Mittels ebenfalls zwischengeschalteter Pumpen kann ein definierter Stoffstrom eingestellt werden. Zur Temperierung der Reaktoren (8) und (13) befinden sie sich getaucht in zwei Thermostat-bäder, die über die Thermostate temperiert werden.
Die Reaktoren (8 und 13) enthalten jeweils noch eine Temperatursonde und im Reaktorausgang jeweils eine Sonde zur Bestimmung des pH-Wertes und des Redoxpotentials. Die Schlaufenreaktoren haben eine volumenspezifische Wärmeabfuhrleistung von 500 kW/m³.

### Herstellungsbeispiele:

### Beispiel 1 : Gemäß Erfindung: Herstellung eines Polymers in einem zweistufigen Schlaufenreaktor

Die Apparatur wird zu Beginn mit Wasser gespült und die Reaktoren 8 und 13 mit Wasser geflutet. In Vorratsgefäß 1 werden 2.540 g H₂O vorgelegt und unter Rühren als Polyethermakromonomer 2.756 g Vinyloxybutylpoly(ethylenoxid)-Schmelze mit einer zahlenmittleren Molmasse von 3000 g·mol⁻¹ und 5,39 g einer wässrigen KOH-Lösung (50 Gew.-%) zugegeben. Nach dem Abkühlen werden zu der klaren Lösung 197,7 g einer 3%igen wässerigen Lösung Rongalit C^{®} (Natriumhydroxymethylsulfinat, beziehbar bei BASF SE) eingerührt. Vorratsgefäß 2 wird mit min. 100 g einer wässrigen NaOH-Lösung (20 Gew.-%) befüllt. Die Natronlauge dient zur Regelung des pH-Wertes während der Polymerisation. In Vorratsgefäß 3 werden 360 g H₂O vorgelegt und unter Rühren 240 g des Säuremonomers 2-Propensäure (Acrylsäure) eingetragen. In Vorratsgefäß 4 werden 356 g Wasser vorgelegt und unter Rühren 16 g MPS (3-Mercaptopropansäure) und 28,3 g einer 1,83 %igen wässerigen Lösung aus FeSO₄·7H₂O gelöst. Vorratsgefäß 5 mit einer 2%-igen H₂O₂ Lösung und Vorratsgefäß 6 wird mit 485 g entionisiertem Wasser und 15 g Rongalit C^{®} gefüllt.
Zu Beginn der Reaktion werden die beiden Kreislaufpumpen sowie alle Pumpen gestartet und die Thermostattemperatur so eingestellt, dass die Temperatur des Reaktionsmediums konstant 15°C beträgt.
Die Stoffströme der Reaktanden aus Vorratsgefäß 1, 2, 3 und 4 werden entsprechend eingestellt, dass die Summe der mittleren Verweilzeiten 4 Minuten in Reaktor 8 und 4 Minuten in Reaktor 13 betragen. Der Stoffstrom aus Voratsgefäß 5 wird auf 1,8 g/h zum Start der Polymerisation eingestellt. Es ist gewährleistet, dass die Einleitung des Polyethermakromonomers in den Polymerisationsreaktor in der Weise getrennt von der des Säuremonomers erfolgt, dass das Polyethermakromonomer in dem Polymerisationsreaktor mit der Initiator, monomere Ausgangsstoffe sowie Copolymer enthaltenden Reaktions-komposition vermischt wird und dabei erstmals mit dem Säuremonomer in Kontakt gerät. Nach Einstellen der Stoffströme wird in Zeitabständen, die der Summe der mittleren Verweilzeiten der Reaktoren entsprechen jeweils eine Probe entnommen, mittels einer alkalischen 3%igen Methoxyhydrochinon-Lösung werden Reaktion und Nebenreaktion gestoppt und per Hochleistungsflüssigkeitschromatographie (HPLC) und Größenausschlußchromatographie (SEC bzw. GPC) analysiert. Der stationäre Zustand des Versuchs ist dann erreicht, wenn sich die Form des Gelchromatographieelutionsdiagramms (GPC-Diagramms) und die ermittelten Molmassenmittelwerte in Abhängigkeit von der Zeit nicht mehr ändern. Nach Erreichen des stationären Zustands wird eine für die Versuchsbedingungen repräsentative Probe entnommen (Polymer 1) und per Größenausschlußchromatographie analysiert und daraus die Molmassenverteilung und deren Mittelwerte sowie der Umsatz ermittelt. Am Ende der Reaktion werden alle Stoffströme auf Null gestellt und die Apparatur mit Wasser gespült.

### Analyse der Copolymere aus Beispiel 1

Die Polymere werden mittels Größenausschlußchromatographie bezüglich mittlere Molmasse analysiert (Säulenkombination: Suprema 3000 , Suprema 1000 und Suprema 30 der Firma PSS, Mainz; Eluent: wässerige Lösung aus Na₂HPO₄ (0,03 mol/l) und 0,5 g/l Natriumazid; Injektionsvolumen 50 µl; Flußrate 0,8 ml/min). Die Kalibration zur Bestimmung der mittleren Molmasse erfolgte mit linearen Poly(ethylenoxid)standards.

Folgende Werte konnten ermittelt werden:

| Polymername | M̅_̅{̅W̅}̅/g·mol-1 |
|---|---|
| Polymer 1 (aus Beispiel 1) | 46.600 |

Die Umsätze an niedermolekularen Monomeren, wie der Acrylsäure wurden mittels Gradient-Hochleistungsflüssig-chromatographie (HPLC) ermittelt.
Die Umsätze an Macromonomer wurden mittels Hochleistungsflüssigchromatographie am Kritischen Punkt von Polyethylenglykol ("HPLC-CC") ermittelt.

| | Acrylsäure | Macromonomer |
|---|---|---|
| Umsatz im ersten Schlaufenreaktor | 88% | 80% |
| Gesamtumsatz mit zweitem Schlaufenreaktor | 96% | 93% |

### Anwendungstests

Das erfindungsgemäße Polymer wurde auf seine Eigenschaften als Betonverflüssiger in einem geeigneten Testsystem untersucht. Hierzu wurde das Polymer mit einer Lösung von NaOH in Wasser auf einen pH-Wert von 6,5 ± 0,2 eingestellt und mit geringen Mengen eines konventionellen Entschäumers zur Steuerung des Luftporengehalts versetzt.
Für die Tests wurde folgende Mischungsrezeptur verwendet:

| Einsatzstoff | Menge |
|---|---|
| Zement Typ CEM I 42,5R | 330 kg/m³ |
| Kalksteinmehl | 80 kg/m³ |
| Sand, Körnung 0 - 4 mm | 965 kg/m³ |
| Kies, Körnung 4 - 16 mm | 915 kg/m³ |
| Wasser gesamt | 145 L/m³ (entspricht w/z 0,44) |
| Polymer (Aktiv, bezogen auf 100% Feststoff) | 0,495 kg/m³ |

Bei der Durchführung der Tests wurden zunächst Zement, Kalksteinmehl, Sand und Kies 10 Sekunden lang trocken gemischt; darauf 15% des Wasser zugegeben und 120 Sekunden gemischt. Anschließend wurden das restliche Wasser und die Menge des jeweiligen Polymers zugegeben und weitere 120 Sekunden gemischt (entspricht einem Wasser/Zementverhältnis von 0,44 und einer Polymerdosierung von 0,15% Feststoff bezogen auf die Zementeinwaage). Anschließend wurde das Ausbreitmaß gemäß DIN EN 12350-2 direkt nach der Herstellung sowie nach 10 und 30 Minuten bestimmt. Als Referenzpolymer wurde ein handelsüblicher Hochleistungsverflüssiger der BASF, Glenium® ACE 430 verwendet und wurde in gleicher Menge wie das erfindungsgemäße Polymer eingesetzt.

Folgende Werte wurden ermittelt:

| Polymer | Ausbreitmaß / cm | | | Bemerkung |
|---|---|---|---|---|
| | Nach Herstellung | 10 Minuten | 30 Minuten | |
| Referenz | 59 | 43 | 31 | Nach 30 Minuten nicht mehr verarbeitbar |
| Erfindungsgemäßes Polymer | 64 | 43 | 30 | |

Das erfindungsgemäß hergestellte Polymer zeigt bei gleicher Dosierung eine bessere Verflüssigungswirkung direkt nach Herstellung des Betons im Vergleich zu dem Referenzpolymer. Weiterhin weist es eine vergleichbare Konsistenzhaltung auf.

## Patentansprüche

1. Verfahren zur kontinuierlichen Herstellung von Polymeren in einer Polymerisationseinrichtung, wobei die Ausgangsstoffe mindestens ein olefinisch ungesättigtes Polyethermakromonomer und mindestens ein olefinisch ungesättigtes Säuremonomer und mindestens einen radikalischen Initiator umfassen und die Polymerisation bei Temperaturen zwischen - 20 und +120°C durchgeführt wird, **dadurch gekennzeichnet, dass** die Polymerisationseinrichtung mindestens einen Schlaufenreaktor umfasst, welcher mindestens eine Zuführungsleitungen für die Ausgangsstoffe und mindestens einen Abfluss aufweist, wobei der Schlaufenreaktor mindestens eine Reaktionszone umfasst, welche eine volumenspezifische Wärmeabfuhrleistung von mindestens 10 kW/m³ aufweist.

2. Verfahren nach Anspruch 1, **dadurch gekennzeichnet, dass** das olefinisch ungesättigte Säuremonomer durch Polymerisation umgesetzt und dadurch eine Struktureinheit im Polymer erzeugt wird, die gemäß einer der allgemeinen Formeln (Ia), (Ib), (Ic) und/oder (Id) ist 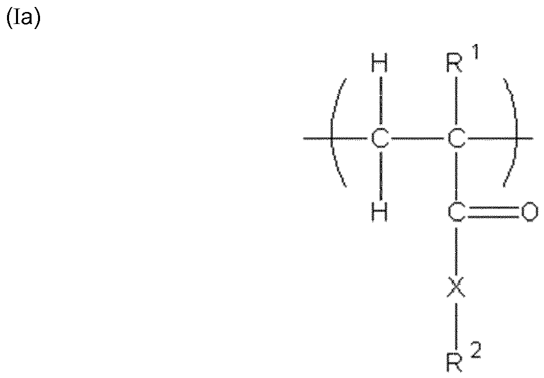 mit
R¹ gleich oder verschieden sowie repräsentiert durch H und/oder eine unverzweigte oder verzweigte C₁ - C₄ Alkylgruppe;
X gleich oder verschieden sowie repräsentiert durch NH-(CₙH₂ₙ) mit n = 1, 2, 3 oder 4 und/oder O-(CₙH₂ₙ) mit n = 1, 2, 3 oder 4 und/oder durch eine nicht vorhandene Einheit;
R² gleich oder verschieden sowie repräsentiert durch OH, SO₃H, PO₃H₂, O-PO₃H₂ und/oder para substituiertes C₆H₄-SO₃H, mit der Maßgabe, dass falls X eine nicht vorhandene Einheit ist, R² durch OH repräsentiert wird; 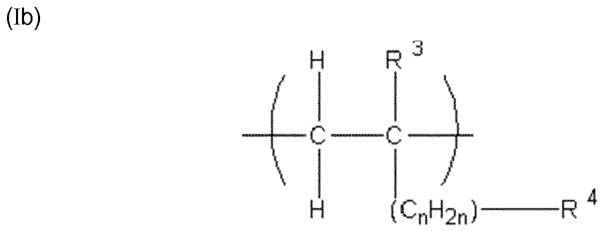 mit
R³ gleich oder verschieden sowie repräsentiert durch H und/oder eine unverzweigte oder verzweigte C₁ - C₄ Alkylgruppe;
n = 0, 1, 2, 3 oder 4
R⁴ gleich oder verschieden sowie repräsentiert durch SO₃H, PO₃H₂, O-PO₃H₂ und/oder para substituiert vorliegendes C₆H₄-SO₃H; 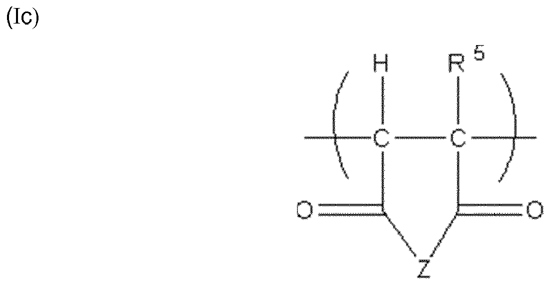 mit
R⁵ gleich oder verschieden sowie repräsentiert durch H und/oder eine unverzweigte oder verzweigte C₁ - C₄ Alkylgruppe;
Z gleich oder verschieden sowie repräsentiert durch O und/oder NH; 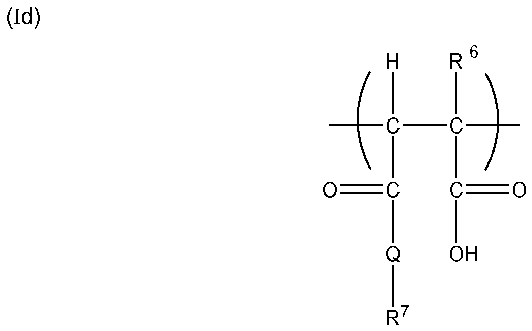 mit
R⁶ gleich oder verschieden sowie repräsentiert durch H und/oder eine unverzweigte oder verzweigte C₁ - C₄ Alkylgruppe;
Q gleich oder verschieden sowie repräsentiert durch NH und/oder O;
R⁷ gleich oder verschieden sowie repräsentiert durch H, (CₙH₂ₙ)-SO₃H mit n = 0, 1, 2, 3 oder 4, (CₙH₂ₙ)-OH mit n = 0, 1, 2, 3 oder 4; (CₙH₂ₙ)-PO₃H₂ mit n = 0, 1, 2, 3 oder 4, (CₙH₂ₙ)-OPO₃H₂ mit n= 0, 1, 2, 3 oder 4, (C₆H₄)-SO₃H, (C₆H₄)-PO₃H₂, (C₆H₄)-OPO₃H₂ und/oder (CₘH₂ₘ)ₑ-O-(A'O)_{α}-R⁹ mit m = 0, 1, 2, 3 oder 4, e = 0, 1, 2, 3 oder 4, A' = C_{x'}H_{2x'} mit x' = 2, 3, 4 oder 5 und/oder CH₂C(C₆H₅)H-, α= eine ganze Zahl von 1 bis 350 mit R⁹ gleich oder verschieden sowie repräsentiert durch eine unverzweigte oder verzweigte C₁ - C₄ Alkylgruppe.

3. Verfahren nach Anspruch 1 oder 2, **dadurch gekennzeichnet, dass** als Säuremonomer Methacrylsäure, Acrylsäure, Maleinsäure, Maleinsäureanhydrid, ein Halbester der Maleinsäure oder eine Mischung aus mehreren dieser Komponenten eingesetzt wird.

4. Verfahren nach einem der Ansprüche 1 bis 3, **dadurch gekennzeichnet, dass** das Polyethermakromonomer durch Polymerisation umgesetzt und dadurch eine Struktureinheit im Polymer erzeugt wird, die gemäß einer der allgemeinen Formeln (IIa), (IIb) (IIc) und/oder (IId) ist 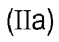 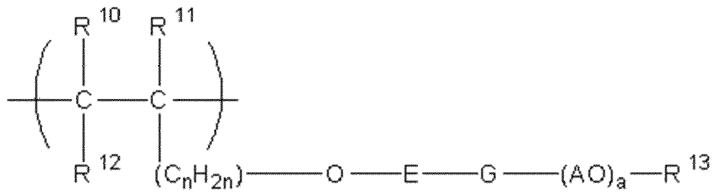 mit
R¹⁰, R¹¹ sowie R¹² jeweils gleich oder verschieden und unabhängig voneinander repräsentiert durch H und/oder eine unverzweigte oder verzweigte C₁ - C₄ Alkylgruppe;
E gleich oder verschieden sowie repräsentiert durch eine unverzweigte oder verzweigte C₁ - C₆ Alkylengruppe, eine Cyclohexylgruppe, CH₂-C₆H₁₀, ortho, meta oder para substituiert vorliegendes C₆H₄ und/oder eine nicht vorhandene Einheit;
G gleich oder verschieden sowie repräsentiert durch O, NH und/oder CO-NH mit der Maßgabe, dass falls E eine nicht vorhandene Einheit ist, G auch als eine nicht vorhandene Einheit vorliegt;
A gleich oder verschieden sowie repräsentiert durch CₓH₂ₓ mit x = 2, 3, 4 und/oder 5 (bevorzugt x = 2) und/oder CH₂CH(C₆H₅);
n gleich oder verschieden sowie repräsentiert durch 0, 1, 2, 3, 4 und/oder 5;
a gleich oder verschieden sowie repräsentiert durch eine ganze Zahl von 2 bis 350 (bevorzugt 10 - 200);
R¹³ gleich oder verschieden sowie repräsentiert durch H, eine unverzweigte oder verzweigte C₁ - C₄ Alkylgruppe, CO-NH₂, und/oder COCH₃; 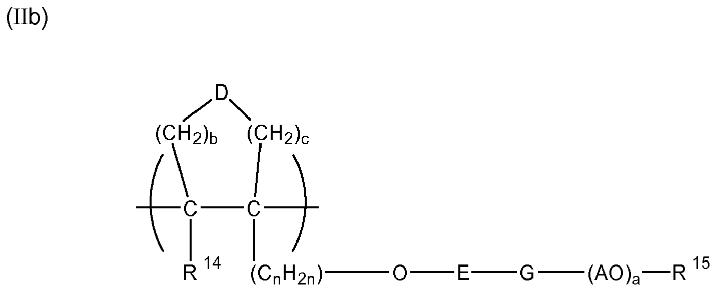 mit R¹⁴ gleich oder verschieden sowie repräsentiert durch H und/oder eine unverzweigte oder verzweigte C₁ - C₄ Alkylgruppe;
E gleich oder verschieden sowie repräsentiert durch eine unverzweigte oder verzweigte C₁ - C₆ Alkylengruppe, eine Cyclohexylgruppe, CH₂-C₆H₁₀, ortho, meta oder para substituiert vorliegendes C₆H₄ und/oder durch eine nichtvorhandene Einheit;
G gleich oder verschieden sowie repräsentiert durch eine nicht vorhandene Einheit, O, NH und/oder CO-NH mit der Maßgabe, dass falls E eine nicht vorhandene Einheit ist, G auch als eine nicht vorhandene Einheit vorliegt;
A gleich oder verschieden sowie repräsentiert durch CₓH₂ₓ mit x = 2, 3, 4 und/oder 5 und/oder CH₂CH(C₆H₅);
n gleich oder verschieden sowie repräsentiert durch 0, 1, 2, 3, 4 und/oder 5
a gleich oder verschieden sowie repräsentiert durch eine ganze Zahl von 2 bis 350;
D gleich oder verschieden sowie repräsentiert durch eine nicht vorhandene Einheit, NH und/oder O, mit der Maßgabe, dass falls D eine nicht vorhandene Einheit ist: b = 0, 1, 2, 3 oder 4 sowie c = 0, 1, 2, 3 oder 4, wobei b + c = 3 oder 4, und
mit der Maßgabe dass wenn D NH und/oder O ist: b = 0, 1, 2 oder 3, c = 0, 1, 2 oder 3, wobei b + c = 2 oder 3;
R¹⁵ gleich oder verschieden sowie repräsentiert durch H, eine unverzweigte oder verzweigte C₁ - C₄ Alkylgruppe, CO-NH₂, und/oder COCH₃; 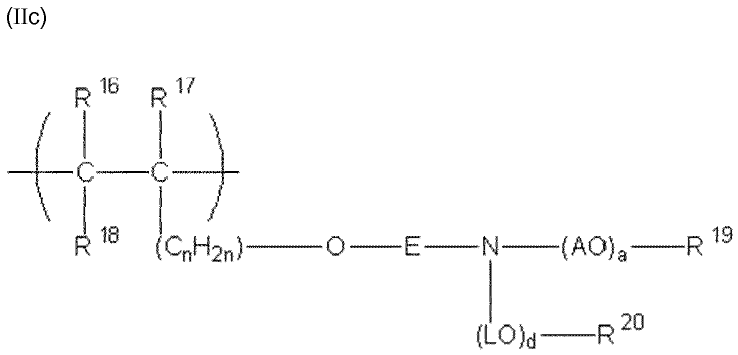 mit
R¹⁶, R¹⁷ sowie R¹⁸ jeweils gleich oder verschieden und unabhängig voneinander repräsentiert durch H und/oder eine unverzweigte oder verzweigte C₁ - C₄ Alkylgruppe;
E gleich oder verschieden sowie repräsentiert durch eine unverzweigte oder verzweigte C₁ - C₆ Alkylengruppe, eine Cyclohexylgruppe, CH₂-C₆H₁₀, ortho, meta oder para substituiert vorliegendes C₆H₄ und/oder durch eine nicht vorhandene Einheit;
A gleich oder verschieden sowie repräsentiert durch CₓH₂ₓ mit x = 2, 3, 4 und/oder 5 und/oder CH₂CH(C₆H₅);
n gleich oder verschieden sowie repräsentiert durch 0, 1, 2, 3, 4 und/oder 5;
L gleich oder verschieden sowie repräsentiert durch CₓH₂ₓ mit x = 2, 3, 4 und/oder 5 und/oder CH₂-CH(C₆-H₅);
a gleich oder verschieden sowie repräsentiert durch eine ganze Zahl von 2 bis 350;
d gleich oder verschieden sowie repräsentiert durch eine ganze Zahl von 1 bis 350;
R¹⁹ gleich oder verschieden sowie repräsentiert durch H und/oder eine unverzweigte oder verzweigte C₁ - C₄ Alkylgruppe,
R²⁰ gleich oder verschieden sowie repräsentiert durch H und/oder eine unverzweigte C₁ - C₄ Alkylgruppe. 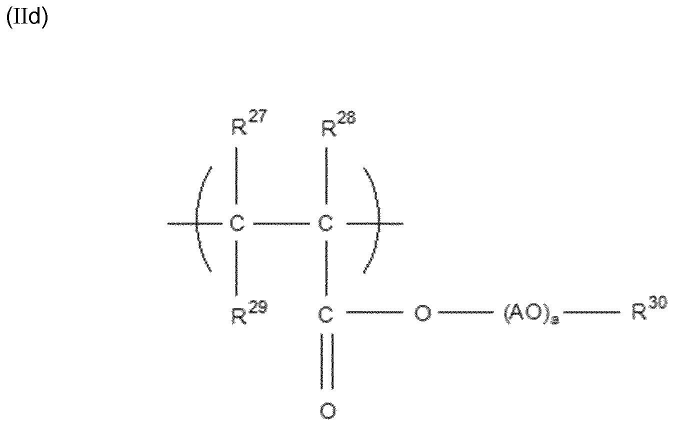 worin
R²⁷, R²⁸ und R²⁹ gleich oder verschieden sind und unabhängig voneinander für H stehen und/oder einen unverzweigten oder verzweigten C₁ - C₄ verzweigten Alkylgruppenrest stehen;
A sind gleich oder verschieden und bedeuten CₓH₂ₓ mit x = 2, 3, 4 und/oder 5 und/oder CH₂CH(C₆H₅);
a sind gleich oder verschieden und stehen für eine ganze Zahl zwischen 2 und 350;
R³⁰ sind gleich oder verschieden und stehen für H und/oder einen unverzweigten oder verzweigten C₁ -C₄ Alkylrest.

5. Verfahren nach einem der Ansprüche 1 bis 4, **dadurch gekennzeichnet, dass** als Polyethermakromonomer alkoxyliertes Isoprenol und/oder alkoxylierter Hydroxybutylvinylether und/oder alkoxylierter (Meth)allylalkohol mit bevorzugt jeweils einer arithmetisch mittleren Zahl an Oxyalkylengruppen von 4 bis 350 eingesetzt wird.

6. Verfahren nach einem der Ansprüche 1 bis 5, **dadurch gekennzeichnet, dass** als monomerer Ausgangsstoff eine vinylisch ungesättigte Verbindung in den Polymerisationsreaktor eingeleitet wird, welche durch Polymerisation umgesetzt wird und dadurch eine Struktureinheit im Polymer erzeugt wird, die gemäß der allgemeinen Formeln (IIIa) und/oder (IIIb) vorliegt 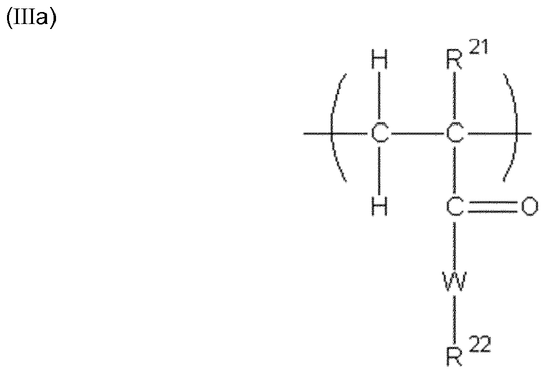 mit
R²¹ gleich oder verschieden sowie repräsentiert durch H und/oder eine unverzweigte oder verzweigte C₁ - C₄ Gruppe;
W gleich oder verschieden sowie repräsentiert durch O und/oder NH;
R²² gleich oder verschieden sowie repräsentiert durch eine verzweigte oder unverzweigte C₁ - C₅-Monohydoxyalkylgruppe; 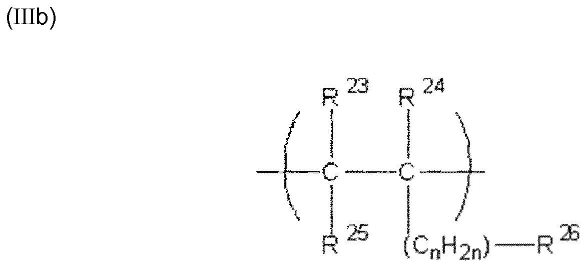 mit
R²³, R²⁴ und R²⁵ jeweils gleich oder verschieden sowie jeweils unabhängig repräsentiert durch H und/oder eine unverzweigte oder verzweigte C₁ - C₄ Alkylgruppe;
n gleich oder verschieden sowie repräsentiert durch 0, 1, 2, 3 und/oder 4;
R²⁶ gleich oder verschieden sowie repräsentiert durch (C₆H₅), OH und/oder -COCH₃.

7. Verfahren nach einem der Ansprüche 1 bis 6, **dadurch gekennzeichnet, dass** so viel olefinisch ungesättigtes Polyethermakromonomer pro Mol olefinisch ungesättigtem Säuremonomer in die Polymerisationseinrichtung eingeleitet wird, dass sich im gebildeten Polymer ein arithmetisch mittleres molares Verhältnis von Säuremonomerstruktureinheiten zu Polyethermakromonomerstruktureinheiten von 20:1 bis 1:1, bevorzugt von 12:1 bis 1:1 einstellt.

8. Verfahren nach einem der Ansprüche 1 bis 7, **dadurch gekennzeichnet, dass** insgesamt mindestens 45 Mol %, bevorzugt jedoch mindestens 80 Mol % aller Struktureinheiten des Polymers durch Polymerisation von olefinisch ungesättigtem Säuremonomer und olefinisch ungesättigtem Polyethermakromonomer erzeugt werden.

9. Verfahren nach einem der Ansprüche 1 bis 8, **dadurch gekennzeichnet, dass** das mindestens eine olefinisch ungesättigte Polyethermakromonomer und das mindestens eine olefinisch ungesättigte Säuremonomer getrennt über verschiedene Zuführungsleitungen dem Schlaufenreaktor zugeführt werden.

10. Verfahren nach einem der Ansprüche 1 bis 9, **dadurch gekennzeichnet, dass** der Schlaufenreaktor eine Einrichtung zur Umwälzung des Reaktionsmediums umfasst.

11. Verfahren nach einem der Ansprüche 1 bis 9, **dadurch gekennzeichnet, dass** der Schlaufenreaktor innenliegende Kühl- und Mischelemente umfasst.

12. Verfahren nach einem der Ansprüche 1 bis 10, **dadurch gekennzeichnet, dass** die Polymerisationseinrichtung noch mindestens einen dem Schlaufenreaktor nachgeschalteten, kontinuierlich betriebenen Reaktor aufweist, in welchem über den Abfluss des Schlaufenreaktors die Polymer enthaltende Reaktionskomposition eingeleitet wird.

13. Verfahren nach Anspruch 11, **dadurch gekennzeichnet, dass** in den nachgeschalteten Reaktor monomere Ausgangsstoffe und/oder Initiatorkomponenten eingeleitet werden.

14. Polymer herstellbar gemäß einem Verfahren nach einem der Ansprüche 1 bis 13.

15. Verwendung eines Polymers gemäß Anspruch 14 als Dispergiermittel für hydraulische Bindemittel.
